# EUROPEAN PATENT APPLICATION

(11) **EP 4 209 369 A1**
(43) Date of publication of application: **12.07.2023**
(21) Application number: 21863585.2
(22) Date of filing: 30.08.2021
(51) Int. Cl.: B60H 1/34

(54) **AIR HANDLING DEVICE AND VEHICLE AIR CONDITIONER MODULE**

(30) Priority: 01.09.2020 CN 202010903558
(71) Applicant: Valeo Automotive Air Conditioning Hubei Co., Ltd., Shashi Hubei Province 434007 (CN)
(72) Inventor: LIU, Tingwei, Jingzhou, Hubei 434007 (CN); XIA, Ning, Jingzhou, Hubei 434007 (CN)
(74) Representative: Valeo Systèmes Thermiques
(86) International application number: PCT/CN2021/115450
(87) International publication number: WO 2022/048520

(57) **Abstract**

The present invention relates to an air handling device and a vehicle air conditioner module. In the air handling device provided by the present invention, the drive assembly can drive an air mixing damper and a mode damper through a single cam, and thus the drive assembly has the advantages of a simple structure and high transmission efficiency. The vehicle air conditioner module provided by the present invention comprises the air handling device described above, and thus it also has the advantages of a simple structure and high transmission efficiency.

## Description

### Technical Field

The present invention relates to the field of vehicle air conditioning, and in particular to an air handling device and a vehicle air conditioner module.

### Background Art

Vehicle air conditioning systems regulate the ambient temperature and humidity in a vehicle cabin by sending conditioned air into it. A vehicle air conditioning system comprises a vehicle air conditioner module, which comprises a heat exchanger and an air handling device for conditioning air.

In the technical solutions of the prior art, an air handling device comprises a housing, an air handling unit, a mode damper, an air mixing damper, and a drive assembly. The housing has an air inlet that allows air to enter the housing and an air outlet that allows air to leave the housing. The air handling unit may be a heater. The mode damper is arranged upstream of the air outlet to control the flow of air flowing out from the air outlet, wherein a set of drive assemblies is used to drive the movement of the mode damper; the air mixing damper is arranged upstream of the air handling unit to control the ratio of air passing through the air handling unit. Another set of drive assemblies is used to drive the movement of the air mixing damper. Air that passes through the air handling unit can be mixed with air that has not passed through the air handling unit before being discharged from the housing via the mode damper and the air outlet.

In the above technical solution, since there are two sets of different drive assemblies, for example, two independent drivers, which respectively drive the mode damper and the air mixing damper, this results in a complex structure and low transmission efficiency of the air handling device.

### Summary of the Invention

The purpose of the present invention is to provide an air handling device, which has the advantages of a simple structure and high transmission efficiency.

The purpose of the present invention is also to provide a vehicle air conditioner module, which comprises said air handling device.

The air handling device for achieving the purpose comprises: a housing, having an air inlet and an air outlet; an air handling unit, used to handle air entering the housing from the air inlet; an air mixing damper, used to control the ratio of the air passing through the air handling unit; and a mode damper, used to control the flow of the air flowing out from the air outlet; the air handling device further comprises a drive assembly, which comprises a cam; the cam has a cam axis, a first cam track and a second cam track; and the cam is configured to rotate about the cam axis, so as to drive the first cam track and the second cam track to rotate about the cam axis, wherein the first cam track is used to drive the air mixing damper, and the second cam track is used to drive the mode damper.

In one embodiment, the drive assembly further comprises a first sliding end and a second sliding end; the first sliding end is configured to slide along the first cam track, and the second sliding end is configured to slide along the second cam track; the distance between the first sliding end and the cam axis is a first distance; the distance between the second sliding end and the cam axis is a second distance; the cam actuates the air mixing damper through changes in the first distance; and the cam actuates the mode damper through changes in the second distance.

In one embodiment, the drive assembly further comprises a first cam link; the first cam link has a first link axis, the first sliding end and a first driving end; the first cam link is configured to rotate about the first link axis; the first sliding end is configured to slide along the first cam track; the distance between the first sliding end and the cam axis is a first distance; the cam actuates the first cam link through changes in the first distance; and the first driving end is used to drive the air mixing damper.

In one embodiment, the drive assembly further comprises a second cam link; the second cam link has a second link axis, the second sliding end and a second driving end; the second cam link is configured to rotate about the second link axis; the second sliding end is configured to slide along the second cam track; the distance between the second sliding end and the cam axis is a second distance; the cam actuates the second cam link through changes in the second distance; and the second driving end is used to drive the mode damper.

In one embodiment, the drive assembly further comprises a mixing damper link; the mixing damper link has a third sliding end, a third link axis and a third driving end; the mixing damper link is configured to rotate about the third link axis; the first driving end has a first link track; the third sliding end is configured to slide along the first link track; the distance between the third sliding end and the first link axis is a third distance; the first cam link actuates the mixing damper link through changes in the third distance; and the third driving end is used to drive the air mixing damper.

In one embodiment, the air mixing damper has a mixing damper axis; and the third driving end is connected to the air mixing damper to drive the air mixing damper to rotate about the mixing damper axis, wherein the third link axis coincides with the mixing damper axis.

In one embodiment, the first cam track has at least one first idle section and at least one first driving section, wherein the first distance does not change within the first idle section and changes within the first driving section; and the second cam track has at least one second idle section and at least one second driving section, wherein the second distance does not change within the second idle section and changes within the second driving section.

In one embodiment, when the first sliding end slides from the starting point to the ending point of a first idle section, the second sliding end slides from the starting point to the ending point of a second idle section synchronously; and/or, when the first sliding end slides from the starting point to the ending point of a first driving section, the second sliding end slides from the starting point to the ending point of a second driving section synchronously.

In one embodiment, the ending point of the first idle section is connected to the starting point of the first driving section; the ending point of the second idle section is connected to the starting point of the second driving section; and/or the ending point of the first driving section is connected to the starting point of the first idle section; the ending point of the second driving section is connected to the starting point of the second idle section.

In one embodiment, when the second sliding end slides from the starting point to the ending point of a second idle section, the first sliding end slides synchronously from the starting point of a first idle section along at least one of the first driving sections to the ending point of another first idle section having a different first distance.

In one embodiment, the first distance increases or decreases monotonically.

The vehicle air conditioner module for achieving the purpose comprises a heat exchanger and the air handling device described above.

Positive benefits and progress of the present invention are: in the air handling device provided by the present invention, the drive assembly can drive an air mixing damper and a mode damper through a single cam, and thus the drive assembly has the advantages of a simple structure and high transmission efficiency. The vehicle air conditioner module provided by the present invention comprises the air handling device described above, and thus it also has the advantages of a simple structure and high transmission efficiency.

### Brief Description of the Drawings

The above and other features, characteristics and advantages of the present invention will become clearer in the description below with reference to the accompanying drawings and embodiments. In the drawings:
Figure 1 is a schematic diagram of the vehicle air conditioner module in one embodiment of the present invention, which shows the air inlet;
Figure 2 is schematic diagram of the vehicle air conditioner module in one embodiment of the present invention, which shows the drive assembly;
Figure 3 is a schematic diagram of the connections between the drive assembly and the dampers in one embodiment of the present invention;
Figure 4 is an exploded view of Figure 3;
Figure 5 is a schematic diagram of the cam in one embodiment of the present invention, which shows the groove-shaped cam track;
Figure 6 is a top view of the cam in one embodiment of the present invention;
Figure 7 is a schematic diagram of the relationship between the cam angle and the damper opening in one embodiment of the present invention;
Figure 8 is a schematic diagram of a first air conditioning mode in one embodiment of the present invention;
Figure 9 is a schematic diagram of a second air conditioning mode in one embodiment of the present invention;
Figure 10 is a schematic diagram of a third air conditioning mode in one embodiment of the present invention;
Figure 11 is a schematic diagram of a fourth air conditioning mode in one embodiment of the present invention;
Figure 12 is a schematic diagram of a fifth air conditioning mode in one embodiment of the present invention;
Figure 13 is a schematic diagram of a sixth air conditioning mode in one embodiment of the present invention;
Figure 14 is a schematic diagram of a seventh air conditioning mode in one embodiment of the present invention.

### Detailed Description of the Embodiments

Various embodiments or examples of the subject technical solution are disclosed below. To simplify the disclosure, specific examples of various components and arrangements are described below. Of course, these are only examples and are not intended to limit the scope of the present invention. For example, the distribution of a first feature in a second feature in the subsequent description may be implemented as distribution by direction association between the first feature and the second feature, or as an additional feature formed between the first feature and the second feature so that the first feature and the second feature are not directly associated. In addition, the numerals and/or letters in the drawings may be repeated in different examples for these descriptions. The repetition is intended for briefness and clarity and does not in itself indicate a connection between various embodiments and/or structures. Further, when a first element is described in connection or in combination with a second element, the description includes embodiments where the first element and the second element are directly connected or joined with each other and may also include those where one or more intermediate elements are used so that the first element and the second element are indirectly connected or are joined.

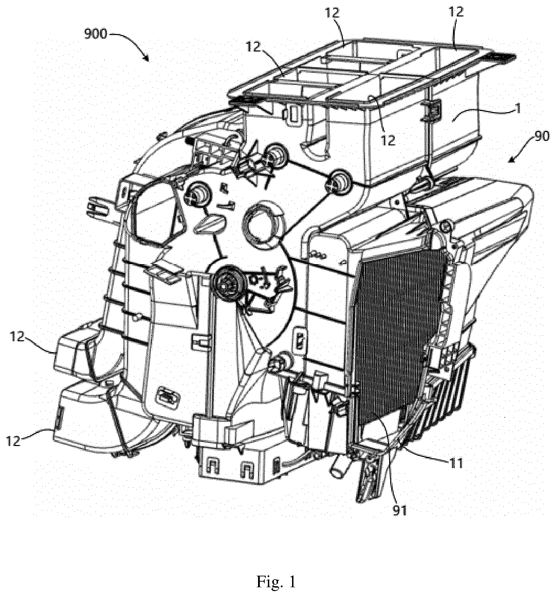

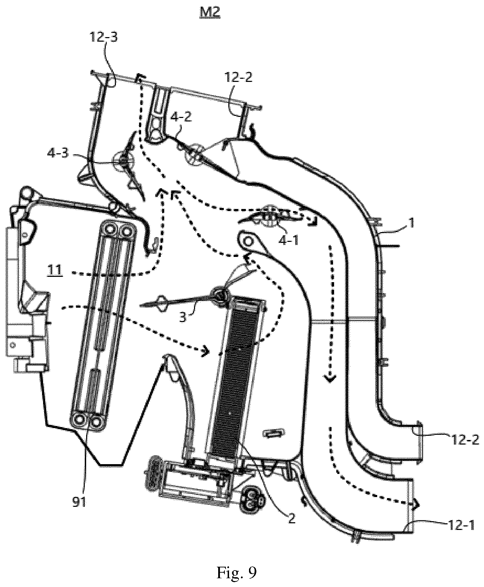

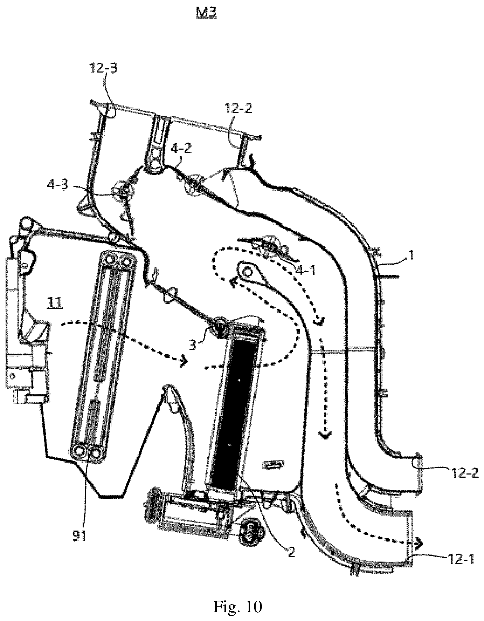

It should be noted that Figures 1 to 10 are all used as examples and are not drawn proportionally and may not constitute limitations on the actual scope of the present invention.

A vehicle air conditioning system comprises a compressor, a condenser, an evaporator and an expansion valve that form the refrigeration cycle, as well as an air handling device for handling and conveying air. In order to achieve a compact structure of the vehicle air conditioning system, a first heat exchanger or a second heat exchanger may be integrated in the air handling device to form a vehicle air conditioner module.

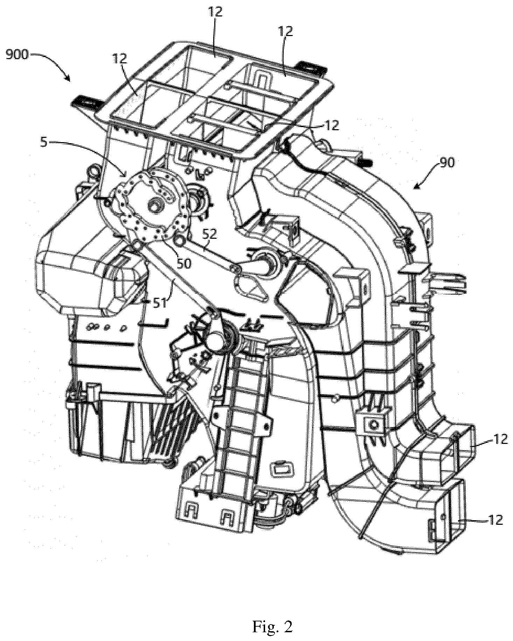

Figures 1 and 2 show a vehicle air conditioner module 900 described above, which comprises an air handling device 90 and a heat exchanger 91. When not operating in the heat pump mode, the heat exchanger 91 is an evaporator.

The air handling device 90 comprises a housing 1, an air handling unit 2, an air mixing damper 3, a mode damper 4, a drive assembly 5 and a fan (not shown in the figures). The housing 1 has an air inlet 11 and an air outlet 12. The air handling unit 2, the air mixing damper 3 and the mode damper 4 are arranged in the housing 1. The fan is used to send high-pressure air into the air inlet 11. The air handling unit 2 is used to handle the air entering the housing 1 from the air inlet 11. The air mixing damper 3 is disposed upstream of the air handling unit 2, and is used to control the ratio of the air passing through the air handling unit 2. The mode damper 4 is disposed upstream of the air outlet 12, and is used to control the flow of the air flowing out from the air outlet 12. The air handling unit 2 may be but is not limited to a heater, for example, a PTC heater, an integrated condenser, or a combination of a PTC heater and an integrated condenser. The air outlet 12 comprises an outlet for feet air 12-1, an outlet for face air 12-2 and an outlet for defrosting air 12-3.

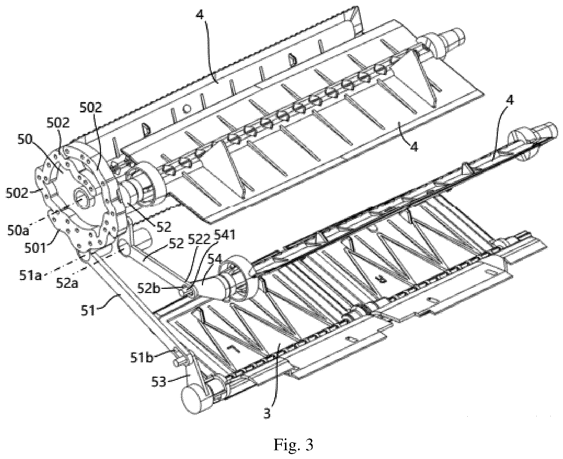

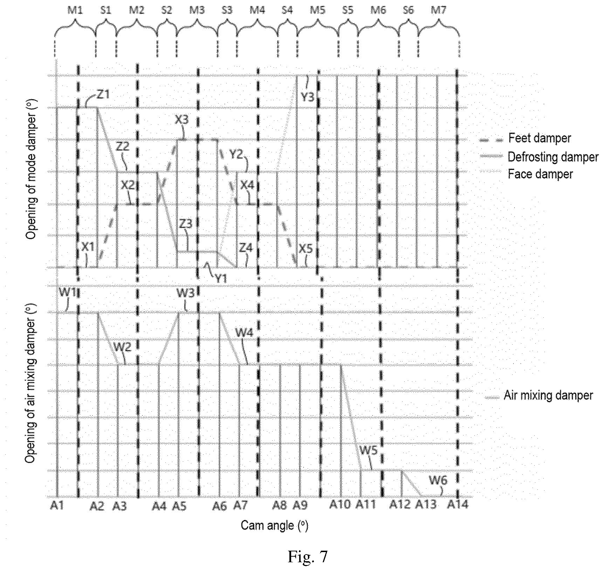

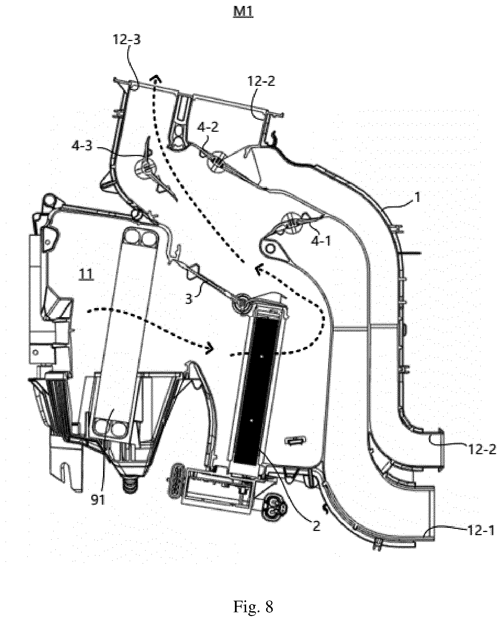

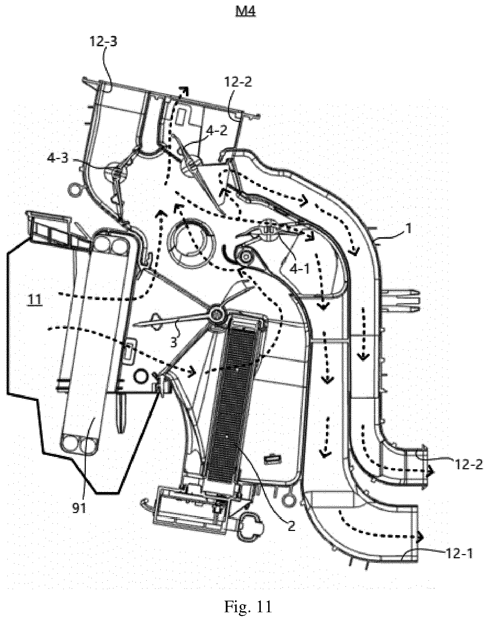

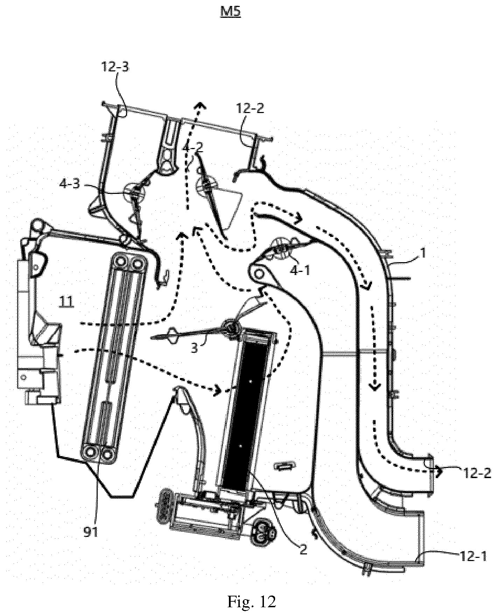

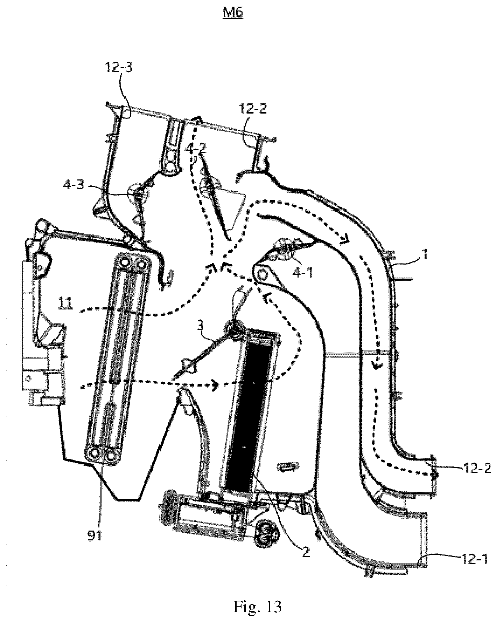

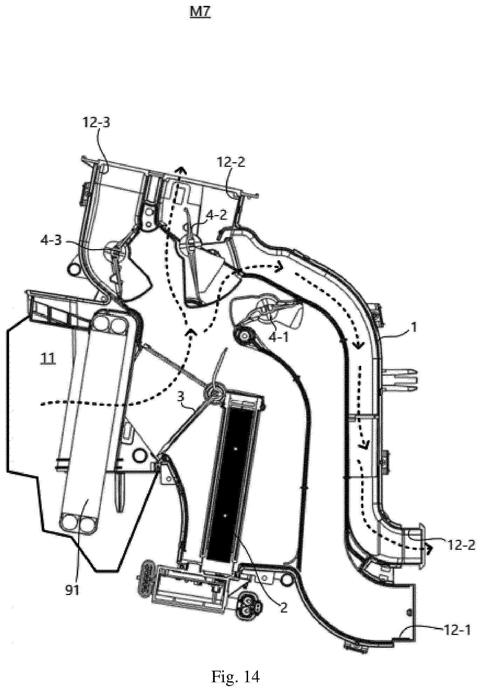

As shown in Figures 3, 4 and 8, in the embodiment shown in the figures, the mode damper 4 comprises a first mode damper, a second mode damper and a third mode damper. The first mode damper may be the damper for feet air 4-1, the second mode damper may be the damper for face air 4-2, and the third mode damper may be the damper for defrosting air 4-3. As shown in Figure 7, the combination of the opening of the air mixing damper 3 and the opening of the different mode dampers 4 can form a plurality of air conditioning modes, which are shown in Figures 8, 9, 10, 11, 12, 13 and 14 respectively.

More specifically, the damper for feet air 4-1 has a first mode damper axis 4a-1, the damper for face air 4-2 has a second mode damper axis 4a-2, and the damper for defrosting air has a third mode damper axis 4a-3. The damper for feet air 4-1, the damper for face air 4-2 and the damper for defrosting air 4-3 are respectively rotatably disposed on the housing 1. The air mixing damper 3 has a mixing damper axis 3a, and the air mixing damper 3 is rotatably disposed on the housing 1. The first mode damper axis 4a-1, the second mode damper axis 4a-2, the third mode damper axis 4a-3 and the mixing damper axis 3a are preferably parallel to each other and kept stationary relative to each other.

As shown in Figures 2, 3, 4, 5 and 6, the air mixing damper 3 and the mode damper 4 are driven by the drive assembly 5. The drive assembly 5 comprises a cam 50; the cam 50 has a cam axis 50a, a first cam track 501 and a second cam track 502; the first cam track 501 and the second cam track 502 are disposed away from the cam axis 50a. The cam 50 is configured to rotate about the cam axis 50a, and the first cam track 501 and the second cam track 502 follow the rotation of the cam 50 to rotate about the cam axis 50a, wherein the first cam track 501 drives the air mixing damper 3 by sliding fit, and the second cam track 502 drives the mode damper 4 by sliding fit.

Since the cam 50 has the first cam track 501 and the second cam track 502, the drive assembly 5 can drive the air mixing damper 3 and a mode damper 4 through a single cam 50, and thus the drive assembly 5 has the advantages of a simple structure and high transmission efficiency.

More specifically, the second cam track 502 comprises a track 502-1 for the damper for feet air, a track 502-2 for the damper for face air and a track 502-3 for the damper for defrosting air. The track 502-1 for the damper for feet air, the track 502-2 for the damper for face air, the track 502-3 for the damper for defrosting air and the first cam track 501 are disposed on the cam 50. The track 502-1 for the damper for feet air is used to drive the damper for feet air 4-1, the track 502-2 for the damper for face air is used to drive the damper for face air 4-2, and the track 502-3 for the damper for defrosting air is used to drive the damper for defrosting air 4-3.

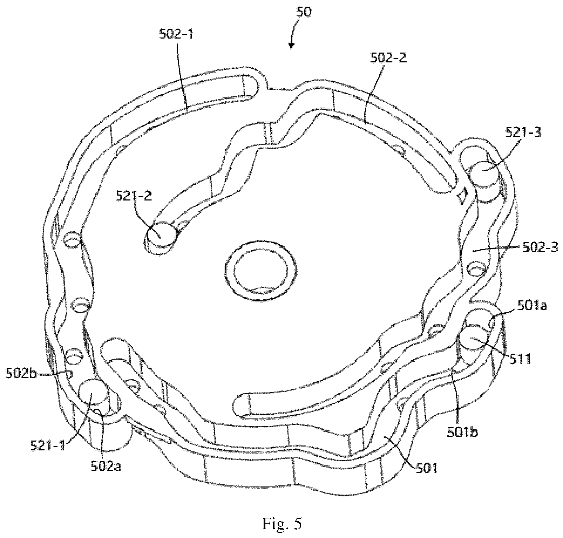

As shown in Figure 5, the first cam track 501 and the second cam track 502 are in a groove shape. In embodiments not shown, the first cam track 501 and the second cam track 502 may also be in the shape of strips protruding from the outer surface of the cam 50.

With reference to Figures 3, 4, 5 and 6, the drive assembly 5 further comprises a first cam link 51. The first cam link 51 has a first link axis 51a, a first sliding end 511 and a first driving end 512; the first cam link 51 is configured to rotate about the first link axis 51a; the first sliding end 511 is configured to slide along the first cam track 501; the distance between the first sliding end 511 and the cam axis 50a is the first distance D1, and the first distance D1 is configured to change when the first sliding end 511 slides along the first cam track 501; the cam 50 actuates the first cam link 51 through changes in the first distance D1; and the first driving end 512 is used to drive the air mixing damper 3. The first link axis 51a is preferably parallel to the cam axis 50a and kept stationary relative to it. The presence of the first cam link 51 allows the air mixing damper 3 to be set at a certain distance from the cam 50, while improving the stability of transmission.

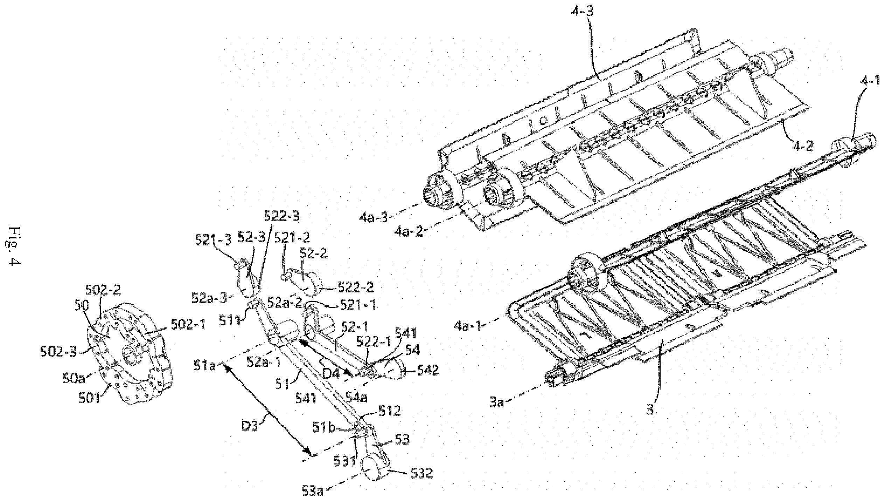

Further, as shown in Figure 4, the drive assembly 5 further comprises a mixing damper link 53; the mixing damper link 53 has a third sliding end 531, a third link axis 53a and a third driving end 532; the mixing damper link 53 is configured to rotate about the third link axis 53a; the first driving end 512 has a first link track 51b; the third sliding end 531 is configured to slide along the first link track 51b; the distance between the third sliding end 531 and the first link axis 51a is the third distance D3; the first cam link 51 actuates the mixing damper link 53 through changes in the third distance D3; and the third driving end 532 is used to drive the air mixing damper 3. The first link track 51b is defined by the inner wall of an elongated hole provided at the first driving end 512. The elongated hole is preferably a through hole. The first link track 51b cooperates with the third sliding end 531 to realize the power transmission process, so that the mixing damper link 53 has a relatively large rotation range when driven by the first cam link 51. The third link axis 53a is preferably parallel to the first link axis 51a, and is kept stationary relative to the first link axis 51a.

More specifically, the air mixing damper 3 has a mixing damper axis 3a; and the third driving end 532 is connected to the air mixing damper 3 to drive the air mixing damper 3 to rotate about the mixing damper axis 3a, wherein the third link axis 53a coincides with the mixing damper axis 3a. With this design, the drive assembly 5 has a compact structure. In the embodiment shown in Figure 4, the third driving end 532 is detachably connected to the air mixing damper 3 by, for example, a shaft-hole fit. In embodiments not shown, the third driving end 532 may also be formed integrally with the rotating shaft of the air mixing damper 3.

Continuing to refer to Figures 3, 4, 5 and 6, the drive assembly 5 further comprises a second cam link 52; the second cam link 52 has a second link axis 52a, a second sliding end 521 and a second driving end 522; the second cam link 52 is configured to rotate about the second link axis 52a; the second sliding end 521 is configured to slide along the second cam track 502; the distance between the second sliding end 521 and the cam axis 50a is the second distance D2; the cam 50 actuates the second cam link 52 through changes in the second distance D2; and the second driving end 522 is used to drive the mode damper 4. The second link axis 52a is preferably parallel to the cam axis 50a and kept stationary relative to it. The presence of the second cam link 52 allows the mode damper 4 and the damper for feet air 4-1 as shown in Figure 4 to be set at a certain distance from the cam 50, while improving the stability of transmission.

The second cam link 52 comprises a link for feet air 52-1, a link for face air 52-2 and a link for defrosting air 52-3, and correspondingly, the second link axis 52a comprises an axis 52a-1 of the link for feet air, an axis 52a-2 of the link for face air and an axis 52a-3 of the link for defrosting air. The link for feet air 52-1 rotates about the axis 52a-1 of the link for feet air, the link for face air 52-2 rotates about the axis 52a-2 of the link for face air, and the link for defrosting air 52-3 rotates about the axis 52a-3 of the link for defrosting air. The axis 52a-1 of the link for feet air, the 52a-2 axis of the link for face air and the axis 52a-3 of the link for defrosting air are preferably parallel to the cam axis 50a and are kept stationary relative to it.

The second sliding end 521 comprises a sliding end for feet air 521-1, a sliding end for face air 521-2 and a sliding end for defrosting air 521-3. The sliding end for feet air 521-1 is fitted in a sliding manner with the track 502-1 of the damper for feet air, the sliding end for face air 521-2 is fitted in a sliding manner with the track 502-2 of the damper for face air, and the sliding end for defrosting air 521-3 is fitted in a sliding manner with the track 502-3 of the damper for defrosting air.

As shown in Figure 5, the first sliding end 511 and the second sliding end 521 are cylindrical, and the outer circumferential surface of the first sliding end 511 and the outer circumferential surface of the second sliding end 521 are respectively fitted in a sliding manner with the inner wall of the groove-shaped first cam track 501 and the inner wall of the groove-shaped second cam track 502.

Referring to Figures 3 and 4, the drive assembly 5 further comprises a mode damper link 54. The mode damper link 54 has a fourth sliding end 541, a fourth link axis 54a and a fourth driving end 542; the mode damper link 54 is configured to rotate about the fourth link axis 54a; the second driving end 522 has a second link track 52b; the fourth sliding end 541 is configured to slide along the second link track 52b; the distance between the fourth sliding end 541 and the second link axis 52a is the fourth distance D4; the second cam link 52 actuates the mode damper link 54 through changes in the fourth distance D4; and the fourth driving end 542 is used to drive the mode damper 4. The second link track 52b is defined by the inner wall of an elongated hole provided at the second driving end 522. The elongated hole is preferably a through hole. The second link track 52b cooperates with the fourth sliding end 541 to realize the power transmission process, so that the mode damper link 54 has a relatively large rotation range when driven by the second cam link 52. The fourth link axis 54a is preferably parallel to the second link axis 52a, and is kept stationary relative to the second link axis 52a.

As shown in Figures 5, 6 and 7, the first cam track 501 has at least one first idle section 501a and at least one first driving section 501b, wherein the first distance D1 does not change within the first idle section 501a and changes within the first driving section 501b; and the second cam track 502 has at least one second idle section 502a and at least one second driving section 502b, wherein the second distance D2 does not change within the second idle section 502a and changes within the second driving section 502b.

The first idle section 501a extends on a circle centered on the cam axis 50a, so that the first distance D1 can be kept constant. The first driving section 501b extends from a circle centered on the cam axis 50a to another circle centered on the cam axis 50a, so that the first distance D1 can vary.

The second idle section 502a extends on a circle centered on the cam axis 50a, so that the second distance D2 can be kept constant. The second driving section 502b extends from a circle centered on the cam axis 50a to another circle centered on the cam axis 50a, so that the second distance D2 can vary.

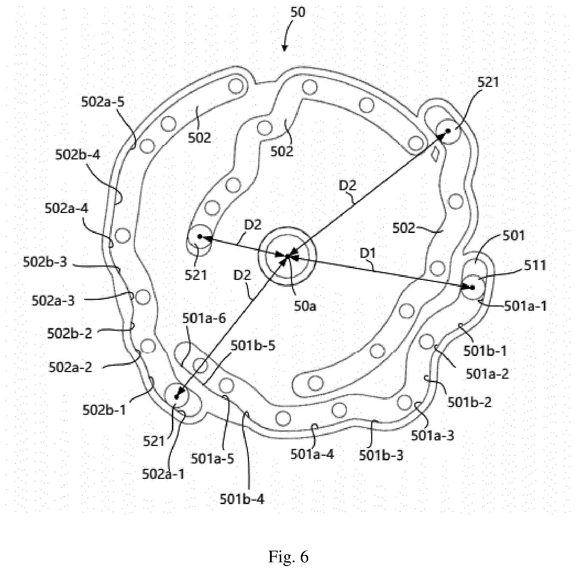

With the first idle section 501a, the first driving section 501b, the second idle section 502a and the second driving section 502b, the air mixing damper 3 and the mode damper 4 can be driven to different openings, thus forming the different air conditioning modes M1, M2, M3, M4, M5, M6 and M7 as shown in Figures 6, 7, 8, 9, 10, 11, 12, 13 and 14. Different air-conditioning modes are switched through different driving modes.

Referring to Figure 7, the rotational path of the cam 50 includes angular positions A1, A2, A3, A4, A5, A6, A7, A8, A9, A10, A11, A12, A13 and A14. The cam 50 can reciprocate between the angular position A1 and the angular position A14. The cam 50 may be configured to rotate 340° to move from the first angular position A1 to the fourteenth angular position A14.

Referring to Figures 6, 7 and 8, in the first air conditioning mode M1, the cam 50 rotates from the first angular position A1 to the second angular position A2, the first sliding end 511 slides along the first idle section 501a-1 of the first cam track 501, and the first distance D1 remains constant, so that the first cam link 51 will not be actuated by the cam 50, thereby keeping the opening of the air mixing damper 3 unchanged; in addition, the second sliding end 521 slides along the second idle section 502a-1 of the second cam track 502, and the second distance D2 remains constant, so that the second cam link 52 will not be actuated by the cam 50, thereby keeping the opening of the mode damper 4 unchanged; wherein the air mixing damper 3 remains unchanged at the maximum opening W1, so that all the air passes through the air handling unit 2; and the damper for feet air 4-1 remains unchanged at the first minimum opening X1, the damper for face air 4-2 remains unchanged at the minimum opening Y1, and the damper for defrosting air 4-3 remains unchanged at the maximum opening Z1. Therefore, the first air conditioning mode M1 is a defrosting mode.

Referring to Figures 6 and 7, in the first driving mode S1, the cam 50 rotates from the second angular position A2 to the third angular position A3, the first sliding end 511 slides along the first driving section 501b-1 of the first cam track 501, and the first distance D1 changes, so that the first cam link 51 is actuated by the cam 50, thereby changing the opening of the air mixing damper 3; in addition, at least a part of the second sliding end 521 slides along the second driving section 502b-1 of the second cam track 502, and at least a part of the second distance D2 changes, so that at least a part of the second cam link 52 is actuated by the cam 50, thereby changing the opening of at least a part of the mode damper 4; wherein the air mixing damper 3 narrows from the first maximum opening W1 to a first intermediate opening W2, the damper for feet air 4-1 widens from the first minimum opening X1 to a first intermediate opening X2, the damper for face air 4-2 remains unchanged at the minimum opening Y1, and the damper for defrosting air 4-3 narrows from the maximum opening Z1 to a first intermediate opening Z2.

Referring to Figures 6, 7 and 9, in the second air conditioning mode M2, the cam 50 rotates from the third angular position A3 to the fourth angular position A4, the first sliding end 511 slides along the first idle section 501a-2 of the first cam track 501, and the first distance D1 remains constant, so that the first cam link 51 will not be actuated by the cam 50, thereby keeping the opening of the air mixing damper 3 unchanged; in addition, the second sliding end 521 slides along the second idle section 502a-2 of the second cam track 502, and the second distance D2 remains constant, so that the second cam link 52 will not be actuated by the cam 50, thereby keeping the opening of the mode damper 4 unchanged; wherein the air mixing damper 3 remains unchanged at the first intermediate opening W2, so that part of the air passes through the air handling unit 2, while the other part bypasses the air handling unit 2; and the damper for feet air 4-1 remains unchanged at the first intermediate opening X2, the damper for face air 4-2 remains unchanged at the minimum opening Y1, and the damper for defrosting air 4-3 remains unchanged at the first intermediate opening Z2. Therefore, the second air conditioning mode M2 is a feet blowing and defrosting mode.

Referring to Figures 6 and 7, in the second driving mode S2, the cam 50 rotates from the fourth angular position A4 to the fifth angular position A5, the first sliding end 511 slides along the first driving section 501b-2 of the first cam track 501, and the first distance D1 changes, so that the first cam link 51 is actuated by the cam 50, thereby changing the opening of the air mixing damper 3; in addition, at least a part of the second sliding end 521 slides along the second driving section 502b-2 of the second cam track 502, and at least a part of the second distance D2 changes, so that at least a part of the second cam link 52 is actuated by the cam 50, thereby changing the opening of at least a part the mode damper 4; wherein the air mixing damper 3 widens from the first intermediate opening W2 to a second maximum opening W3, the damper for feet air 4-1 widens from the first intermediate opening X2 to the maximum opening X3, the damper for face air 4-2 remains unchanged at the minimum opening Y1, and the damper for defrosting air 4-3 narrows from the first intermediate opening Z2 to a second intermediate opening Z3.

Referring to Figures 6, 7 and 10, in the third air conditioning mode M3, the cam 50 rotates from the fifth angular position A5 to the sixth angular position A6, the first sliding end 511 slides along the first idle section 501a-3 of the first cam track 501, and the first distance D1 remains constant, so that the first cam link 51 will not be actuated by the cam 50, thereby keeping the opening of the air mixing damper 3 unchanged; in addition, the second sliding end 521 slides along the second idle section 502a-3 of the second cam track 502, and the second distance D2 remains constant, so that the second cam link 52 will not be actuated by the cam 50, thereby keeping the opening of the mode damper 4 unchanged; wherein the air mixing damper 3 remains unchanged at the second maximum opening W3, so that all the air passes through the air handling unit 2; in this embodiment, the second maximum opening W3 is equal to the first maximum opening W1; the damper for feet air 4-1 remains unchanged at the minimum opening X3, the damper for face air 4-2 remains unchanged at the minimum opening Y1, and the damper for defrosting air 4-3 remains unchanged at the second intermediate opening Z3. Therefore, the third air conditioning mode M3 is a feet blowing mode.

Referring to Figures 6 and 7, in the third driving mode S3, the cam 50 rotates from the sixth angular position A6 to the seventh angular position A7, the first sliding end 511 slides along the first driving section 501b-3 of the first cam track 501, and the first distance D1 changes, so that the first cam link 51 is actuated by the cam 50, thereby changing the opening of the air mixing damper 3; in addition, the second sliding end 521 slides along the second driving section 502b-3 of the second cam track 502, and the second distance D2 changes, so that the second cam link 52 is actuated by the cam 50, thereby changing the opening of the mode damper 4; wherein the air mixing damper 3 narrows from the second maximum opening W3 to a second intermediate opening W4, the damper for feet air 4-1 narrows from the maximum opening X3 to a second intermediate opening X4, the damper for face air 4-2 widens from the minimum opening Y1 to an intermediate opening Y2, and the damper for defrosting air 4-3 narrows from the second intermediate opening Z3 to the minimum opening Z4.

Referring to Figures 6, 7 and 11, in the fourth air conditioning mode M4, the cam 50 rotates from the seventh angular position A7 to the eighth angular position A8, the first sliding end 511 slides along the first idle section 501a-4 of the first cam track 501, and the first distance D1 remains constant, so that the first cam link 51 will not be actuated by the cam 50, thereby keeping the opening of the air mixing damper 3 unchanged; in addition, the second sliding end 521 slides along the second idle section 502a-4 of the second cam track 502, and the second distance D2 remains constant, so that the second cam link 52 will not be actuated by the cam 50, thereby keeping the opening of the mode damper 4 unchanged; wherein the air mixing damper 3 remains unchanged at the second intermediate opening W4, so that a part of the air passes through the air handling unit 2, while the other part bypasses the air handling unit 2; in this embodiment, the second intermediate opening W4 is equal to the first intermediate opening W2; the damper for feet air 4-1 remains unchanged at the second intermediate opening X4; and in this embodiment, the second intermediate opening X4 is equal to the first intermediate opening X2; the damper for face air 4-2 remains unchanged at the intermediate opening Y2, and the damper for defrosting air 4-3 remains unchanged at the minimum opening Z4. Therefore, the fourth air conditioning mode M4 is a face and feet blowing mode.

Referring to Figures 6 and 7, in the fourth driving mode S4, the cam 50 rotates from the eighth angular position A8 to the ninth angular position A9, the first sliding end 511 slides along the first idle section 501a-4 of the first cam track 501, and the first distance D1 remains constant, so that the first cam link 51 will not be actuated by the cam 50, thereby keeping the opening of the air mixing damper 3 unchanged; in addition, at least a part of the second sliding end 521 slides along the second driving section 502b-4 of the second cam track 502, and at least a part of the second distance D2 changes, so that at least a part of the second cam link 52 is actuated by the cam 50, thereby changing the opening of at least a part of the mode damper 4; wherein the air mixing damper 3 remains unchanged at the second intermediate opening W4, the damper for feet air 4-1 narrows from the second intermediate opening X4 to the minimum opening X5, the damper for face air 4-2 widens from the intermediate opening Y2 to the maximum opening Y3, and the damper for defrosting air 4-3 remains unchanged at the minimum opening Z4.

Referring to Figures 6, 7 and 12, in the fifth air conditioning mode M5, the cam 50 rotates from the ninth angular position A9 to the tenth angular position A10, the first sliding end 511 slides along the first idle section 501a-4 of the first cam track 501, and the first distance D1 remains constant, so that the first cam link 51 will not be actuated by the cam 50, thereby keeping the opening of the air mixing damper 3 unchanged; in addition, the second sliding end 521 slides along the second idle section 502a-5 of the second cam track 502, and the second distance D2 remains constant, so that the second cam link 52 will not be actuated by the cam 50, thereby keeping the opening of the mode damper 4 unchanged; wherein the air mixing damper 3 remains unchanged at the second intermediate opening W4, so that a part of the air passes through the air handling unit 2, while the other part bypasses the air handling unit 2; in this embodiment, the second intermediate opening W4 is equal to the first intermediate opening W2; the damper for feet air 4-1 remains unchanged at the minimum opening X5; the damper for face air 4-2 remains unchanged at the maximum opening Y3, and the damper for defrosting air 4-3 remains unchanged at the minimum opening Z4. Therefore, the fifth air conditioning mode M5 is a first face blowing mode, in which the temperature of the air for the face is relatively high because the opening of the air mixing damper 3 is relatively wide and a relatively large amount of air passes through the air handling unit 2.

Referring to Figures 6 and 7, in the fifth driving mode S5, the cam 50 rotates from the tenth angular position A10 to the eleventh angular position A11, the first sliding end 511 slides along the first driving section 501b-4 of the first cam track 501, and the first distance D1 changes, so that the first cam link 51 is actuated by the cam 50, thereby changing the opening of the air mixing damper 3; in addition, the second sliding end 521 slides along the second idle section 502a-5 of the second cam track 502, and the second distance D2 remains constant, so that the second cam link 52 will not be actuated by the cam 50, thereby keeping the opening of the mode damper 4 unchanged; wherein the air mixing damper 3 narrows from the second intermediate opening W4 to a third intermediate opening W5, the damper for feet air 4-1 remains unchanged at the minimum opening X5, the damper for face air 4-2 remains unchanged at the maximum opening Y3, and the damper for defrosting air 4-3 remains unchanged at the minimum opening Z4.

Referring to Figures 6, 7 and 13, in the sixth air conditioning mode M6, the cam 50 rotates from the eleventh angular position A11 to the twelfth angular position A12, the first sliding end 511 slides along the first idle section 501a-5 of the first cam track 501, and the first distance D1 remains constant, so that the first cam link 51 will not be actuated by the cam 50, thereby keeping the opening of the air mixing damper 3 unchanged; in addition, the second sliding end 521 slides along the second idle section 502a-5 of the second cam track 502, and the second distance D2 remains constant, so that the second cam link 52 will not be actuated by the cam 50, thereby keeping the opening of the mode damper 4 unchanged; wherein the air mixing damper 3 remains unchanged at the third intermediate opening W5, so that a part of the air passes through the air handling unit 2, while the other part bypasses the air handling unit 2; and the damper for feet air 4-1 remains unchanged at the minimum opening X5, the damper for face air 4-2 remains unchanged at the maximum opening Y3, and the damper for defrosting air 4-3 remains unchanged at the minimum opening Z4. Therefore, the sixth air conditioning mode M6 is a second face blowing mode, in which the temperature of the air for the face is relatively low because the opening of the air mixing damper 3 is relatively narrow and a relatively small amount of air passes through the air handling unit 2.

Referring to Figures 6 and 7, in the sixth driving mode S6, the cam 50 rotates from the twelfth angular position A12 to the thirteenth angular position A 13, the first sliding end 511 slides along the first driving section 501b-5 of the first cam track 501, and the first distance D1 changes, so that the first cam link 51 is actuated by the cam 50, thereby changing the opening of the air mixing damper 3; in addition, the second sliding end 521 slides along the second idle section 502a-5 of the second cam track 502, and the second distance D2 remains constant, so that the second cam link 52 will not be actuated by the cam 50, thereby keeping the opening of the mode damper 4 unchanged; wherein the air mixing damper 3 narrows from the third intermediate opening W5 to the maximum opening W6, the damper for feet air 4-1 remains unchanged at the first minimum opening X5, the damper for face air 4-2 remains unchanged at the maximum opening Y3, and the damper for defrosting air 4-3 remains unchanged at the minimum opening Z4.

Referring to Figures 6, 7 and 14, in the seventh air conditioning mode M7, the cam 50 rotates from the thirteenth angular position A13 to the fourteenth angular position A 14, the first sliding end 511 slides along the first idle section 501a-6 of the first cam track 501, and the first distance D1 remains constant, so that the first cam link 51 will not be actuated by the cam 50, thereby keeping the opening of the air mixing damper 3 unchanged; in addition, the second sliding end 521 slides along the second idle section 502a-5 of the second cam track 502, and the second distance D2 remains constant, so that the second cam link 52 will not be actuated by the cam 50, thereby keeping the opening of the mode damper 4 unchanged; wherein the air mixing damper 3 remains unchanged at the minimum opening W6, so that all the air bypasses the air handling unit 2; the damper for feet air 4-1 remains unchanged at the minimum opening X5, the damper for face air 4-2 remains unchanged at the maximum opening Y3, and the damper for defrosting air 4-3 remains unchanged at the minimum opening Z4. Therefore, the seventh air conditioning mode M7 is a third face blowing mode, in which the temperature of the air for the face is the lowest because the opening of the air mixing damper 3 is the narrowest and the least amount of air passes through the air handling unit 2.

In the different air conditioning modes M1, M2, M3, M4, M5, M6 and M7 of the embodiments of the present invention, the first sliding end 511 and the second sliding end 521 respectively slide along the first idle sections 501a and the second idle sections 502a. When the first sliding end 511 slides from the starting point to the ending point of a first idle section 501a, the second sliding end 521 slides from the starting point to the ending point of a second idle section 502a synchronously. With this design, the air mixing damper 3 and the mode damper 4 are not driven by the rotation of the cam 50 when the air handling unit 90 is in an air conditioning mode, so that the air flow organization in the air handling unit 90 can be kept stable, and the process of adjusting the air outlet temperature by the air handling unit 2 can be simplified.

Referring to Figure 6, the ending point of the first idle section 501a is connected to the starting point of the first driving section 501b; and the ending point of the second idle section 502a is connected to the starting point of the second driving section 502b; and/or the ending point of the first driving section 501b is connected to the starting point of the first idle section 501a; and the ending point of the second driving section 502b is connected to the starting point of the second idle section 502a. The first idle sections 501a and the first driving sections 501b are spaced; the second idle sections 502a and the second driving sections 502b are spaced.

Referring to Figures 6 and 7, when the second sliding end 521 slides from the starting point to the ending point of a second idle section 502a, for example, along the second idle section 502a-5 in Figure 6, the first sliding end 511 slides synchronously from the starting point of the first idle section 501a-4 along at least one of the first driving sections 501b-4 and 501b-5 to the ending point of another first idle section 502a-5 or 501a-6 having a different first distance D1. With this design, the air mixing damper 3 is actuated while the mode damper 4 is kept stationary, so that the air outlet temperature can be adjusted by actuating the mode damper 4 and thus changing its opening without changing the opening of the air outlet 12, thereby simplifying the process of adjusting the air outlet temperature by the air handling unit 2.

Again referring to Figure 6, the first distance D1 decreases monotonically in the process of sliding from one first idle section 501a-4 to another first idle section 501a-6. In an embodiment not shown, the first distance D1 may increase monotonically. The monotonic change in the first distance D1 makes it possible for the opening of the air mixing damper 3 to change monotonically.

Although the present invention is disclosed as above in preferred embodiments, it is not intended to limit the present invention. Anyone skilled in the art can make possible changes and modifications without departing from the spirit and scope of the present invention. Any modification, equivalent change and modification made to the above embodiments according to the technical essence of the present invention without departing from the technical solution of the present invention should fall within the scope defined by the claims of the present invention

## Claims

1. An air handling device, comprising:
a housing (1), having an air inlet (11) and an air outlet (12);
an air handling unit (2), used to handle air entering the housing (1) from the air inlet (11);
an air mixing damper (3), used to control the ratio of air passing through the air handling unit (2); and
a mode damper (4), used to control a flow of the air flowing out from the air outlet (12);
and **characterized in that** the air handling device (90) further comprises a drive assembly (5); the drive assembly (5) comprises a cam (50); the cam (50) has a cam axis (50a), a first cam track (501) and a second cam track (502); and the cam (50) is configured to rotate about the cam axis (50a), so as to drive the first cam track (501) and the second cam track (502) to rotate about the cam axis (50a); and
the first cam track (501) is used to drive the air mixing damper (3), and the second cam track (502) is used to drive the mode damper (4).

2. The air handling device as claimed in claim 1, **characterized in that** the drive assembly (5) further comprises a first cam link (51); the first cam link (51) has a first link axis (51a), a first sliding end (511) and a first driving end (512); the first cam link (51) is configured to rotate about the first link axis (51a); and the first sliding end (511) is configured to slide along the first cam track (501); and
the distance between the first sliding end (511) and the cam axis (50a) is a first distance (D1); the cam (50) actuates the first cam link (51) through changes in the first distance (D1); and the first driving end (512) is used to drive the air mixing damper (3).

3. The air handling device as claimed in claim 2, **characterized in that** the drive assembly (5) further comprises a second cam link (52); the second cam link (52) has a second link axis (52a), a second sliding end (521) and a second driving end (522); the second cam link (52) is configured to rotate about the second link axis (52a); and the second sliding end (521) is configured to slide along the second cam track (502); and
the distance between the second sliding end (521) and the cam axis (50a) is a second distance (D2); the cam (50) actuates the second cam link (52) through changes in the second distance (D2); and the second driving end (522) is used to drive the mode damper (4).

4. The air handling device as claimed in claim 2, **characterized in that** the drive assembly (5) further comprises a mixing damper link (53); the mixing damper link (53) has a third sliding end (531), a third link axis (53a) and a third driving end (532); and the mixing damper link (53) is configured to rotate about the third link axis (53a);
the first driving end (512) has a first link track (51b); the third sliding end (531) is configured to slide along the first link track (51b); and the distance between the third sliding end (531) and the first link axis (51a) is a third distance (D3); and
the first cam link (51) actuates the mixing damper link (53) through changes in the third distance (D3); and the third driving end (532) is used to drive the air mixing damper (3).

5. The air handling device as claimed in claim 4, **characterized in that** the air mixing damper (3) has a mixing damper axis (3a); and the third driving end (532) is connected to the air mixing damper (3) to drive the air mixing damper (3) to rotate about the mixing damper axis (3a), wherein the third link axis (53a) coincides with the mixing damper axis (3a).

6. The air handling device as claimed in claim 3, **characterized in that** the first cam track (501) has at least one first idle section (501a) and at least one first driving section (501b), wherein the first distance (D1) does not change within the first idle section (501a) and changes within the first driving section (501b); and
the second cam track (502) has at least one second idle section (502a) and at least one second driving section (502b), wherein the second distance (D2) does not change within the second idle section (502a) and changes within the second driving section (502b).

7. The air handling device as claimed in claim 6, **characterized in that**, when the first sliding end (511) slides from the starting point to the ending point of a first idle section (501a), the second sliding end (521) slides from the starting point to the ending point of a second idle section (502a) synchronously; and/or
when the first sliding end (511) slides from the starting point to the ending point of a first driving section (501b), the second sliding end (521) slides from the starting point to the ending point of a second driving section (502b) synchronously.

8. The air handling device as claimed in claim 6, **characterized in that** the ending point of the first idle section (501a) is connected to the starting point of the first driving section (501b); and the ending point of the second idle section (502a) is connected to the starting point of the second driving section (502b); and/or
the ending point of the first driving section (501b) is connected to the starting point of the first idle section (501a); and the ending point of the second driving section (502b) is connected to the starting point of the second idle section (502a).

9. The air handling device as claimed in claim 6, **characterized in that**, when the second sliding end (521) slides from the starting point to the ending point of a second idle section (502a), the first sliding end (511) slides synchronously from the starting point of a first idle section (501a) along at least one of the first driving sections (501b) to the ending point of another first idle section (502a) having the different first distance (D1).

10. The air handling device as claimed in claim 9, **characterized in that** the first distance (D1) increases or decreases monotonically.

11. A vehicle air conditioner module, comprising a heat exchanger (91), **characterised in that** the vehicle air conditioner module (900) further comprises the air handling device (90) as claimed in any of claims 1 to 10.
